# EUROPEAN PATENT APPLICATION

(11) **EP 2 753 126 A1**
(43) Date of publication of application: **09.07.2014**
(21) Application number: 11873343.5
(22) Date of filing: 29.09.2011
(51) Int. Cl.: H04W 48/12, H04W 72/04, H04W 28/16, H04W 88/00

(54) **DOWNLINK CONTROL INFORMATION SENDING METHOD, BLIND DETECTION METHOD, BASE STATION AND TERMINAL EQUIPMENT**

(71) Applicant: Fujitsu Limited, Kawasaki-shi, Kanagawa 211-8588 (JP)
(72) Inventor: WANG, Yi, Beijing 100025 (CN); ZHANG, Yuantao, Beijing 100025 (CN); ZHOU, Hua, Beijing 100025 (CN)
(74) Representative: Stebbing, Timothy Charles
(86) International application number: PCT/CN2011/080368
(87) International publication number: WO 2013/044480

(57) **Abstract**

The invention relates to a method tor transmitting Downlink Control information (DCI), a method for blind detection, a base station and terminal equipment. The method for transmitting the DCI includes: a base station generates a DCI, such that a bit length of the DCI of terminal equipment configured with a carrier segment is equal to that of a DCI of the same format of terminal equipment not configured with a carrier segment; and the base station transmits the DCI for the terminal equipment configured with the carrier segment in a common search region of a control channel. Or the base station transmits user-specific DCI in a user-specific search region for the terminal equipment configured with the carrier segment, while does not transmit corresponding user-specific DCI in the common search region of the control channel. Through the above embodiments, the bit length of the common search region will not be increased, thereby avoiding the increase of the number of blind detections at the terminal equipment

## Description

### Technical Field

The invention relates to the field of communications, and particularly, to a method for transmitting downlink control information, a method for blind detection, a base station and terminal equipment.

### Background

In order to meet the requirement of a high data rate, a carrier aggregation technology is proposed in the Long Term Evolution Advanced (LTE-A) system, so as to support bandwidth values provided for the high data rate required. In the carrier aggregation technology, each aggregated carrier is referred to as a Component Carrier (CC).

In Rel-10 of the LTE-A system, the carrier types include backward compatible carrier and non-backward compatible carrier. The backward compatible carrier may be accessed by a terminal of Rel-10, and may be accessed by terminals of Rel-8 and Rel-9, while the non-backward compatible carrier may only be accessed by the terminal of Rel-10 after configuration, and cannot be accessed by the terminals of Rel-8 and Rel-9. In which, the non-backward compatible carrier includes extension carrier and carrier segment, which cannot operate independently but in coordination with the backward compatible carrier. Hereinafter, the carrier of backward compatible is hereinafter referred to as an independent carrier (such as stand-alone CC).

In the LTE system, three downlink resource assignment methods are defined, i.e., resource assignment type 0, resource assignment type 1 and resource assignment type 2. A base station notifies resource assignment information to a terminal through a Resource Assignment (RA) domain in a Downlink Control Information (DCI). The resource assignment information is related to a system bandwidth, thus a bit length of the RA domain varies with the bandwidth.

The terminals of Rel-8/9/10 and Rel-11 are simultaneously existed under one base station. In a case where the base station is configured with both the independent carrier and the carrier segment, the independent carrier is accessible by any type of terminal, while the carrier segment is only configured for the terminal of Rel-11 which having accessed an independent carrier. Thus the terminal of Rel-8/9/10 and the terminal of Rel-11 may have different system bandwidths. As a result, the RA domains in the DCI have different bit lengths, and the users of the same DCI format also have different bit lengths (payloads).

In the LTE/LTE-A system, a common search region and a user-specific search space of a downlink control channel (such as PDCCH) are defined. Common information related to system message, paging, power control, random access, etc. may be transmitted in the common search region, and corresponding DCI may be referred to as common DCI, which can be scrambled by using SI-RNTI, P-RNTI, RA-RNTI, Temporary C-RNTI and TPC-RNTI. For example, the DCI includes format 0/1A/3/3A/1C. In addition, the user-specific information may also be transmitted in the common search region, and corresponding DCI may be referred to as user-specific DCI, which can be scrambled by using SPS C-RNTI or C-RNTI. For example, the DCI includes format 0/1A, etc. In order to decrease the number of blind detections in the PDCCH of the user terminal and the calculation complexity for the user, there are only two types of DCI lengths in the common search region, i.e., those corresponding to DCI format 1c and DCI format 0/1A/3/3A.

Table 1 shows the functions of the above Radio Network Temporary Identifiers (RNTI). As shown in Table 1:

**Table 1**

| Radio Network Temporary Identifier(RNTI) Type | Function |
|---|---|
| System Information-RNTI (SI-RNTI) | System information broadcasting |
| Paging-RNTI (P-RNTI) | Paging |
| Radom Access-RNTI (RA-RNTI) | Random access response |
| Temporary Cell-RNTI (C-RNTI) | Contention resolution; Msg3 transmission |
| Semi-Persistent Scheduling C-RNTI (SPS C-RNTI) | unicast transmission based on Semi-persistent scheduling |
| Cell-RNTI (C-RNTI) | unicast transmission based on dynamic scheduling |
| Transmission Power Control RNTI (TPC-RNTI) | Power control |

But in the process of implementing the invention, the inventor finds that the DCI length of user terminal configured with a carrier segment is unequal to that of Rel-8/9/10 user terminal in some cases. When the DCI of the user terminal configured with the carrier segment is transmitted in the common search region, there will be three DCI lengths in the common search region, thus the number of blind detections at the user terminal is increased and the calculation for the receiving terminal is more complex. There is still no effective method for solving the problem.

To be noted, the above introduction to the technical background is just made for the convenience of clearly and completely describing the technical solutions of the invention, and to facilitate the understanding by a person skilled in the art. It shall not be deemed that the above technical solution is known to a person skilled in the art just because it has been illustrated in the Background section of the invention.

### Summary

The objective of the embodiments of the invention is to provide a method for transmitting DCI, a method for blind detection, a base station and terminal equipment. The method can prevent the occurrence of new DCI length in the common search region, thereby avoiding the increase of the number of blind detections at the terminal equipment and the calculation complexity for the terminal equipment, and being suitable for the terminal equipment configured with a carrier segment.

According to an aspect of the embodiments of the invention, a method for transmitting DCI is provided, when a bit length of a RA domain in a DCI of terminal equipment configured with a carrier segment is unequal to that of a RA domain in a DCI of terminal equipment not configured with a carrier segment, the method including:
generating, by a base station, a DCI for terminal equipment configured with a carrier segment, such that a bit length of the DCI of the terminal equipment configured with the carrier segment is equal to that of a DCI of the same format of terminal equipment not configured with a carrier segment; and
transmitting, by the base station, the DCI for the terminal equipment configured with the carrier segment in a common search region of a control channel, the DCI being common DCI or user-specific DCI.

According to another aspect of the embodiments of the invention, a method for blind detection is provided, when a bit length of a RA domain in a DCI of terminal equipment configured with a carrier segment is unequal to that of a RA domain in a DCI of terminal equipment not configured with a carrier segment, the method including:
detecting, by terminal equipment configured with a carrier segment, corresponding DCI in a common search region of a control channel according to a generation manner of the DCI;
wherein the DCI is generated by a base station in a predefined manner, such that a bit length of the DCI of the terminal equipment configured with the carrier segment is equal to that of a DCI of the same format of terminal equipment not configured with a carrier segment in the common search region.

According to another aspect of the embodiments of the invention, a base station is provided, when a bit length of a RA domain in a DCI of terminal equipment configured with a carrier segment is unequal to that of a RA domain in a DCI of terminal equipment not configured with a carrier segment, the base station including:
a first information generating unit configured to generate a DCI for terminal equipment configured with a carrier segment,, such that a bit length of the DCI of the terminal equipment configured with the carrier segment is equal to that of a DCI of the same format of terminal equipment not configured with a carrier segment; and
a first information transmitting unit configured to transmit the DCI for the terminal equipment configured with the carrier segment in a common search region of a control channel, the DCI being common DCI or user-specific DCI.

According to another aspect of the embodiments of the invention, terminal equipment is provided, configured with a carrier segment by a base station, when a bit length of a RA domain in a DCI of terminal equipment configured with a carrier segment is unequal to that of a RA domain in a DCI of terminal equipment not configured with a carrier segment, the terminal equipment including:
a first blind detecting unit configured to detect corresponding DCI in a common search region of a control channel according to a generation manner of the DCI;
wherein the DCI is generated by the base station in a predefined manner, such that a bit length of the DCI is equal to that of a DCI of the same format of terminal equipment not configured with a carrier segment in the common search region.

According to another aspect of the embodiments of the invention, a method for transmitting DCI is provided, when a bit length of a RA domain in a DCI of terminal equipment configured with a carrier segment is unequal to that of a RA domain in a DCI of terminal equipment not configured with a carrier segment, the method including:
transmitting, by a base station, user-specific DCI in a user-specific search region for terminal equipment configured with a carrier segment, and not transmitting corresponding user-specific DCI in a common search region of a control channel.

According to another aspect of the embodiments of the invention, a method for blind detection, when a bit length of a RA domain in a DCI of terminal equipment configured with a carrier segment is unequal to that of a RA domain in a DCI of terminal equipment not configured with a carrier segment, the method including:
detecting, by terminal equipment configured with a carrier segment, user-specific DCI in a user-specific search region of a control channel, and not detecting the same in a common search region of the control channel.

According to another aspect of the embodiments of the invention, a base station is provided, when a bit length of a RA domain in a DCI of terminal equipment configured with a carrier segment is unequal to that of a RA domain in a DCI of terminal equipment not configured with a carrier segment, the base station including:
a second information transmitting unit configured not to transmit corresponding user-specific DCI for terminal equipment configured with a carrier segment in a common search region of a control channel, and to transmit user-specific DCI in a user-specific search region.

According to another aspect of the embodiments of the invention, terminal equipment is provided, configured with a carrier segment by a base station, when a bit length of a RA domain in a DCI of terminal equipment configured with a carrier segment is unequal to that of a RA domain in a DCI of terminal equipment not configured with a carrier segment, the terminal equipment including:
a second blind detecting unit configured to detect user-specific DCI in a user-specific search region of a control channel, and not to detect user-specific DCI. in a common search region of the control channel.

According to another aspect of the embodiments of the invention, a computer-readable program is provided, wherein when the program is executed in a base station, the program enables a computer to carry out the aforementioned method for transmitting DCI in the base station.

According to another aspect of the embodiments of the invention, a storage medium in which a computer-readable program is stored, wherein the computer-readable program enables a computer to carry out the aforementioned method for transmitting DCI in a base station.

According to another aspect of the embodiments of the invention, a computer-readable program is provided, wherein when the program is executed in terminal equipment, the program enables a computer to carry out the aforementioned method for blind detection in the terminal equipment.

According to another aspect of the embodiments of the invention, a storage medium in which a computer-readable program is stored is provided, wherein the computer-readable program enables a computer to carry out the aforementioned method for blind detection in terminal equipment.

The embodiments of the invention have the following beneficial effect: when a DCI is transmitted for the terminal equipment configured with the carrier segment in a common search region of a PDCCH, the DCI has a bit length equal to that of a DCI of a same format of other terminal equipment in the common search region, or user-specific DCI is not transmitted to the terminal equipment configured with the carrier segment in the common search region, thereby decreasing the number of blind detections at the terminal equipment and the calculation complexity for the terminal equipment.

With reference to the subsequent descriptions and drawings, the particular embodiments of the invention are specifically disclosed to indicate the implementations of the principle of the invention. It shall be appreciated that the scope of the embodiments of the invention is not limited thereto, and the embodiments of the invention comprise many changes, modifications and equivalents within the scope of the spirit and clauses of the accompanied claims.

Features described and/or illustrated with respect to one embodiment can be used in one or more other embodiments in a same or similar way, and/or by being combined with or replacing the features in other embodiments.

To be noted, the term "comprise/include" used herein specifies the presence of feature, element, step or component, not excluding the presence or addition of one or more other features, elements, steps or components or combinations thereof.

### Brief Description of the Drawings

The above and other objectives, features and advantages of the invention will be more obvious from the following detailed descriptions given with reference to the drawings, in which:
Fig. 1 is a schematic diagram of a carrier segment configuration;
Fig. 2 is a flowchart of a method for transmitting DCI according to Embodiment 1 of the invention;
Fig. 3 is a flowchart of a method for transmitting DCI according to Embodiment 2 of the invention;
Fig. 4 is a flowchart of a method for blind detection according to Embodiment 3 of the invention;
Fig. 5 is a structural schematic diagram of a base station according to Embodiment 4 of the invention;
Fig. 6 is a structural schematic diagram of terminal equipment according to Embodiment 5 of the invention;
Fig. 7 is a flowchart of a method for transmitting DCI according to Embodiment 6 of the invention; and
Fig. 8 is a structural schematic diagram of a base station according to Embodiment 8 of the invention.

### Description of the Embodiments

Various embodiments of the invention will be described as follows with reference to the drawings. Those embodiments are just exemplary rather than limitations to the invention. In order that a person skilled in the art can easily understand the principle and the embodiments of the invention, the embodiments of the invention are described through a method for blind detection and a method for transmitting DCI of terminal equipment configured with a carrier segment by taking the LTE-A/LTE system as an example. It shall be appreciated that the invention is not limited to the above system, and is also suitable for other systems concerning the transmission and reception of DCI under the above circumstance.

When a base station configures a carrier segment(CS) for a user, the carrier segment is continuous frequency domain resources closely adjacent to a existing LTE system carrier, and the carrier segment and the existing LTE system carrier are combined into a new carrier with a larger bandwidth.

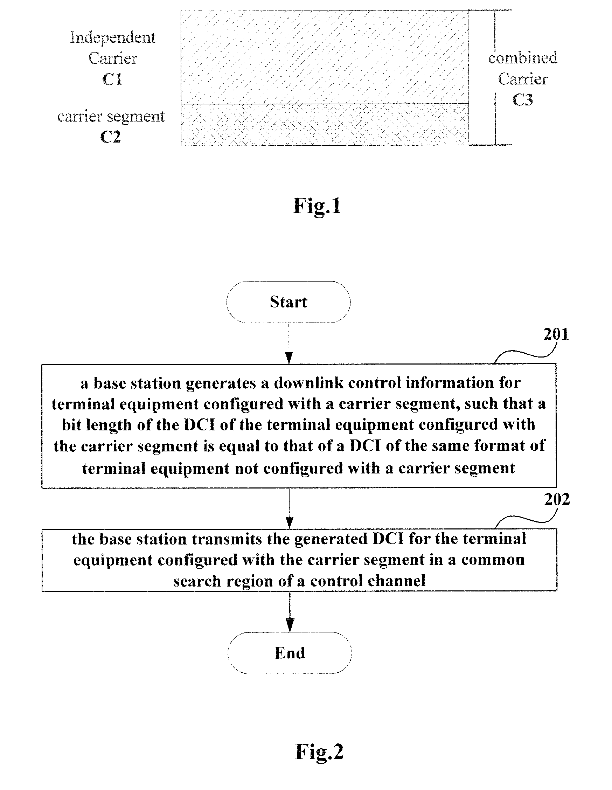

Fig. 1 is a schematic diagram of a carrier segment configuration. As illustrated in Fig. 1, for example, an LTE system carrier C1 (independent carrier) with a bandwidth of 5MHz and a carrier C2 (carrier segment) with a bandwidth of 1.4 MHz are combined into a carrier C3 with a bandwidth of 6.4 MHz, wherein the independent carrier C1 may provide a service to the terminal equipment of LTE Rel-8/9/10, while the carrier segment C2 only provides a service to terminal equipment configured with a carrier segment, such as the terminal equipment of LTE-Advanced Rel-11/12.

In the LTE system, the defined three downlink resource assignment methods are all indicated through the RA domain in the DCI, and their bit lengths vary with the system bandwidth. Table 2 shows the examples of the carrier segment bandwidths of 1.4MHz and 3MHz, but the carrier segment bandwidths are not limited thereto. The bit length of the RA domain is ┌log₂(*N*_{RB}(*N*_{RB} +1)/2)┐, wherein *N*_{RB} is the number of resource blocks (RBs) corresponding to the system bandwidth. Table 3 shows the mapping relation between the system bandwidth and the number of RBs.

**Table 2 Bit Length of RA Domain**

| Bandwidth of independent carrier C1 | 1.4MHz | 3MHz | 5MHz | 10MHz | 15MHz | 20MHz |
|---|---|---|---|---|---|---|
| Bit length of RA domain | 5 | 7 | 9 | 11 | 12 | 13 |
| Bit length of RA domain Carrier segment of 1.4MHz | 7 | 8 | 9 | 11 | 12 | 13 |
| Bit length of RA domain Carrier segment of 3MHz | 8 | 9 | 10 | 12 | 12 | 13 |

**Table 3 Mapping between the System Bandwidth and the Number of RBs**

| Bandwidth | 1.4MHz | 3MHz | 5MHz | 10MHz | 15MHz | 20MHz |
|---|---|---|---|---|---|---|
| Number of RBs | 6 | 15 | 25 | 50 | 75 | 100 |

Table 4 shows the bit length of DCI 1A corresponding to an independent carrier with a bandwidth of 5MHz. Table 5 shows the bit length of DCI 1A corresponding to an independent carrier with a bandwidth of 5MHz and the carrier segment with a bandwidth of 3MHz. As shown in Table 5, the bit length of the DCI. 1A increases with the increase of the bit length of the RA domain.

**Table 4 Bit Length of DCI 1A**

| | Number of bit(s) |
|---|---|
| Flag for DCI 0/1A | 1 |
| VRB assignment flag | 1 |
| Resource assignment(allocation) | 9 (5MHz) |
| Modulation and coding scheme | 5 |
| HARQ number | 3 |
| New data indicator | 1 |
| Redundancy Version | 2 |
| Power control for PUCCH | 2 |
| Padding bits | 1 |
| Payload | 25 |

**Table 5 Bit Length of DCI 1A**

| | Number of bit(s) |
|---|---|
| Flag for DCI 0/1A | 1 |
| VRB assignment flag | 1 |
| Resource assignment(allocatin) | 10 (5+3MHz) |
| Modulation and coding scheme | 5 |
| HARQ number | 3 |
| New data indicator | 1 |
| Redundancy Version | 2 |
| Power control for PUCCH | 2 |
| Padding bits | 1 |
| Payload | 26 |

As shown in Table 2, when the bandwidth of the carrier segment is 1.4MHz and the bandwidth of the independent carrier is 1.4MHz/3MHz, and when the bandwidth of the carrier segment is 3MHz and the bandwidth of the independent carrier is 1.4MHz/3MHz/5MHz/10MHz, the bit length of the RA domain of the terminal equipment configured with the carrier segment is unequal to that of the RA domain of the terminal equipment of Rel-8/9/10, such that the DCI. bit lengths are unequal to each other, as shown in Tables 4 and 5. Thus three DCI bit lengths occur in the common search region, i.e., the embodiment includes the lengths of DCI. 1C, DCI 0/1A/3/3A of the terminal equipment not configured with the carrier segment, and DCI 0/1A of the terminal equipment configured with the carrier segment. Since new DCI bit length occur, the number of blind detections made by the terminal equipment, the calculation complexity of the terminal equipment and the power consumption will all be increased. Thus in a case where the bit length of the RA domain of the terminal equipment configured with the carrier segment is unequal to that of the RA domain of the terminal equipment not configured with the carrier segment such that the DCI bit lengths corresponding to the terminal equipment configured with the carrier segment and the terminal equipment not configured with the carrier segment are unequal to each other, the problem can be avoided through the embodiments of the invention.

The embodiments of the invention are detailedly described as follows with reference to the drawings.

At the transmitting end:
Fig. 2 is a flowchart of a method for transmitting DCI according to Embodiment 1 of the invention. As illustrated in Fig. 2, when a bit length of a RA domain of terminal equipment configured with a carrier segment is unequal to that of a RA domain of terminal equipment not configured with a carrier segment, the method including:
   step 201: a base station generates a downlink control information(DCI) in a predefined manner for terminal equipment configured with a carrier segment, such that a bit length of the DCI of the terminal equipment configured with the carrier segment is equal to that of a DCI of the same format of terminal equipment not configured with a carrier segment; and
   step 202: the base station transmits the generated DCI for the terminal equipment configured with the carrier segment in a common search region of a control channel, wherein the DCI being common DCI or user-specific DCI.

Hereinafter, the bit length of the DCI of the terminal equipment configured with the carrier segment is denoted with L1, and the bit length of the DCI of the same format of the terminal equipment not configured with the segment is denoted with L2.

In the embodiment, the control channel may include downlink control channel such as Physical Downlink Control Channel (PDCCH), which may be divided into a common search region and a user-specific search region.

In the embodiment, the base station transmits corresponding DCI for the terminal equipment configured with the carrier segment in the common search region, wherein the DCI may be common DCI, such as DCI scrambled by using SI-RNTI, P-RNTI, RA-RNTI, Temporary C-RNTI and TPC-RNTI, for example format 0/1A/3/3A/1C. In addition, the DCI may also be user-specific DCI which is scrambled by using SPS C-RNTI or C-RNTI, for example format 0/1A. The DCI is not limited to the above items, and it may include other DCI transmitted in the common search region.

In the embodiment, in a case where the bit length of the RA domain of the terminal equipment configured with the carrier segment is unequal to that of the RA domain of the terminal equipment not configured with the carrier segment such that the DCI bit lengths are unequal to each other, in order to solve the problem in the prior art, the base station may generate DCI in the predefined manner to ensure that L1 is equal to L2. Thus, since the bit length of the DCI of the terminal equipment configured with the carrier segment is equal to that of the DCI of the same format of the terminal equipment not configured with the carrier segment in the common search region, the bit length of the common search region will not be increased, thereby avoiding the increase of the number of blind detections at the terminal equipment and the calculation complexity.

In the embodiment, in step 201, the base station may generate the DCI in the following manner, such that bit length L1 of the DCI of the terminal equipment configured with the carrier segment is equal to bit length L2 of the DCI of the same format of the terminal equipment not configured with the carrier segment:
Manner 1: the bit length of the RA domain in the DCI is determined according to a bandwidth of the backward compatible independent carrier, so as to ensure that L1 is equal to L2. This manner is suitable for the common DCI and the user-specific DCI transmitted in the common search region.

For example, when the independent carrier has a bandwidth of 5MHz, and the configured carrier segment has a bandwidth of 3MHz, it is determined for the terminal equipment configured with the carrier segment that the bit length of the RA domain in the DCI is 9 according to the 5MHz bandwidth of the independent carrier, thereby ensuring that L1 is equal to L2.

Manner 2: a redundant bit may be deleted for the user-specific DCI to ensure that L1 is equal to L2.Wherein, the base station determines bit length L3 of the RA domain in the DCI according to the bandwidths of the independent carrier and the configured carrier segment; determines a difference (L3-L4) between bit length L3 and bit length L4 of the RA domain in the DCI of the same format of the terminal equipment not configured with the carrier segment; and deletes the redundant bit of a number corresponding to the difference, thereby ensuring that L1 is equal to L2.

For example, when the independent carrier has a bandwidth of 5MHz and the configured carrier segment has a bandwidth of 3MHz, it is determined as follows: for the terminal equipment configured with the carrier segment, that bit length L3 of the RA domain in the DCI is 10 according to the bandwidths (5MHz+3MHz) of the independent carrier and the configured carrier segment, and for the terminal equipment not configured with the carrier segment, bit length L4 of the RA domain in the DCI is 9; thus the difference between L3 and L4 is L3-L4=1; correspondingly, one redundant bit is deleted, thereby ensuring that L1 is equal to L2.

It is clear that the configuration of the carrier segment increases the bit length of the RA domain in the generated DCI, thus the redundant bit in the DCI may be deleted to ensure that L1 is equal to L2, wherein the number of the deleted redundant bits is equal to the increment of the bit length of the RA domain.

The above two manners are just embodiments of the invention. The invention is not limited thereto, and other manners ensuring that L1=L2 are also included.

Next, descriptions are made through an example where DCI format 1A is transmitted in the common search region for the terminal equipment configured with the carrier segment. For example, the independent carrier has a bandwidth of 5MHz, and the carrier segment has a bandwidth of 3MHz.

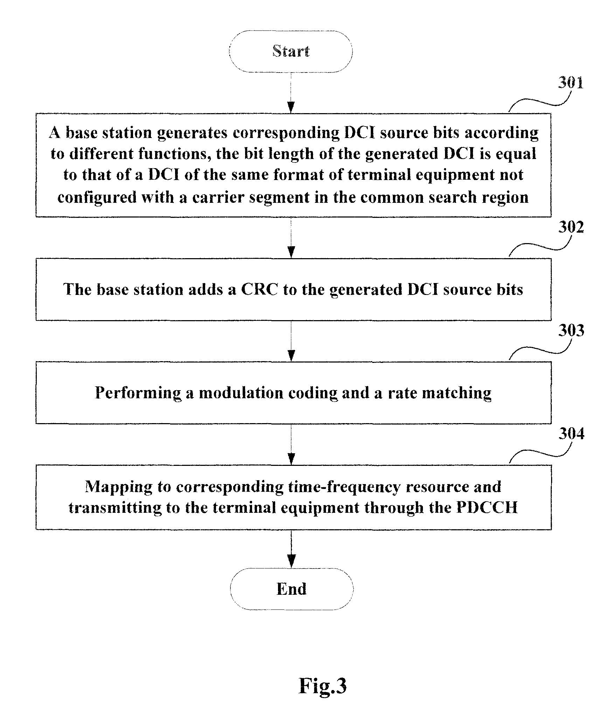

Fig. 3 is a flowchart of a method for transmitting DCI according to Embodiment 2 of the invention. When L1 is unequal to L2, as illustrated in Fig. 3, the method includes:
Step 301: a base station generates corresponding DCI source bits for the terminal equipment configured with the carrier segment according to different functions; wherein bit length L1 of the generated DCI is equal to bit length L2 of a DCI of the same format of terminal equipment not configured with a carrier segment.

In which, corresponding DCI source bits may be generated according to the transmission mode and the system requirement, wherein the process of generating the source bits is similar to the prior art, and herein is omitted.

The DCI type may be common DCI or user-specific DCI as mentioned above, and herein is omitted.

For example, as shown in Tables 4-5, the bit length of the DCI of the terminal equipment configured with the carrier segment is unequal to that of the DCI of the terminal equipment not configured with the carrier segment. Thus in the embodiment, when the DCI format 1A is generated, the base station may determine the bit length of the RA domain according to the bandwidth of the independent carrier, i.e., determine that the bit length of the RA domain is 9 according to 5MHz (as shown in Table 1), such that L1=L2. In Table 5, the bit length of the RA domain is determined according to 5MHz rather than (5MHz+3MHz).

Or, when the DCI format 1A is user-specific DCI, a redundant bit may be deleted to ensure that L1=L2, i.e., firstly, the number of bits in the RA domain is determined according to the bandwidths of the independent carrier and the carrier segment, namely it is acquired that the number of the bits in the RA domain is 10 (as shown in Table 1) according to (5MHz+3MHz), thus one redundant bit may be deleted to ensure that L1=L2. As shown in Table 5, the bit length of the RA domain acquired according to (5MHz+3MHz) is 10, thus one redundant bit shall be deleted from Table 5 to ensure that L1=L2.

Step 302: the base station adds a Cyclic Redundancy Check (CRC) to the generated DCI source bits.

In which, CRC is the most common error check code in the field of digital communication.

In the embodiment, the CRC coding for DCI may use a 16 bit check field in which RNTI information for identifying DCI affiliation and function is added. For example, when the SI-RNTI, P-RNTI, RA-RNTI, Temporary C-RNTI, TPC-RNTI as shown in Table 1 is added in the check field, i.e., the DCI is scrambled by using the above RNTI information, it means that the DCI is common DCI and its function is shown in Table 1. When the SPS-RNTI, C-RNTI as shown in Table 1 is added in the check field, i.e., the DCI is scrambled by using the above RNTI information, it means that the DCI is user-specific DCI and its function is shown in Table 1.

Step 303: performing a modulation coding and a rate matching for the DCI source bits added with the CRC.

Step 304: forming a PDCCH, mapping the PDCCH to corresponding physical time-frequency resource, and transmitting the scrambled DCI to the terminal equipment through the PDCCH.

The process of carrying out steps 302-304 is similar to the prior art, and herein is omitted. In addition, the method for generating DCI of other formats is similar to the above embodiment, and herein is omitted.

In the embodiment, through the above manner, the base station prevents the increase of the bit length in the common search region, thus the base station can pre-appoint with the terminal equipment configured with the carrier segment. For example, the base station may notify the terminal equipment through a message, such that the terminal equipment configured with the carrier segment can search the common search region for the DCI according to the appointment.

As can be seen from the above embodiment, the base station ensures L1=L2 by determining the bit length of the RA domain in the DCI of the terminal equipment configured with the carrier segment according to the bandwidth of the independent carrier, or deleting the redundant bit, and transmits corresponding DCI for the terminal equipment configured with the carrier segment in the common search region of the control channel, thus the bit length of the common search region will not be increased, thereby avoiding the increase of the number of blind detections at the terminal equipment and the calculation complexity.

At the receiving end:
For the terminal equipment configured with a carrier segment, the embodiments of the invention provide a method for blind detection, including: detecting, by a terminal equipment configured with a carrier segment, corresponding DCI in a common search region of a control channel according to a generation manner of the DCI; wherein the DCI is generated by the base station in a predefined manner, such that bit length L1 of the DCI is equal to bit length L2 of a DCI of the same format of terminal equipment not configured with a carrier segment in the common search region.

In which, through the following predefined manner, bit length L1 of the DCI of the terminal equipment configured with the carrier segment is equal to bit length L2 of the DCI. of the same format of the terminal equipment not configured with the carrier segment:
It is ensured that L1=L2 by determining the bit length of the RA domain in the DCI. of the terminal equipment configured with the carrier segment according to the bandwidth of the independent carrier, or deleting the redundant bit. The details have been described in Embodiment 1, and herein are omitted.

In the embodiment, when the base station transmits the DCI in the manner of Embodiment 1, the terminal equipment configured with the carrier segment may detect the DCI in the common search region.

In the embodiment, the terminal equipment configured with the carrier segment can predetermine how the base station generates the DCI, i.e., predetermine that the base station generates the DCI to ensure that L1=L2, by determining the bit length of the RA domain according to the bandwidth of the independent carrier, or deleting the redundant bit. For example, the base station notifies the terminal equipment through a signaling. Thus, the terminal equipment configured with the carrier segment may detect the DCI with reference to the above information, so as to for example judge the specific meaning of the source bit when understanding the source bit after the CRC check is successful.

In which, the control channel may include downlink control channel, such as PDCCH which may be divided into a common search region and a user-specific search region.

In the embodiment, the DCI transmitted by the base station in the common search region for the terminal equipment configured with the carrier segment may be common DCI, or user-specific DCI. The DCI format is described in Embodiment 1, and herein is omitted. The DCI is not limited to the above items, and it may include other DCI transmitted in the common search region.

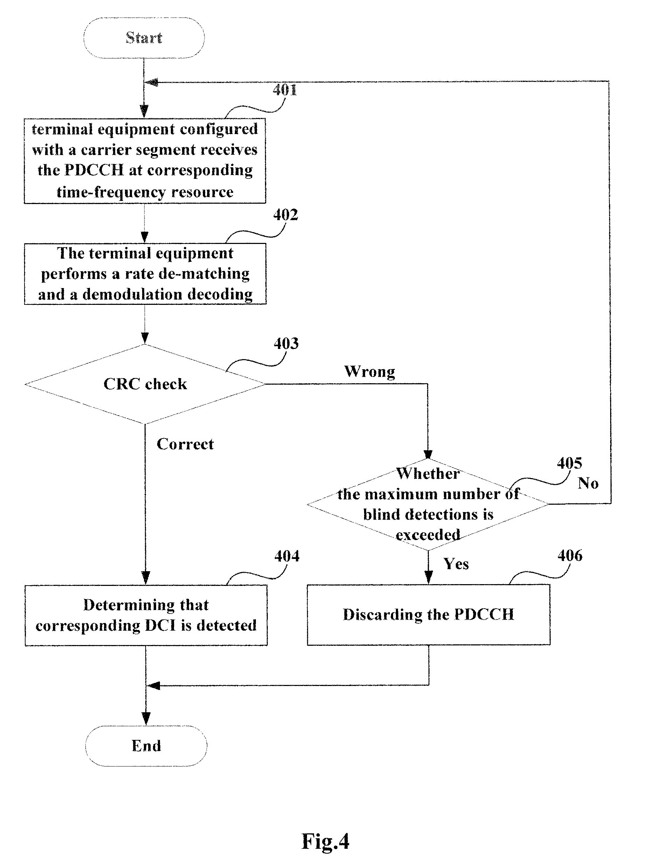

Next, a method for blind detection according to the embodiment of the invention is described through an example. Fig. 4 is a flowchart of a method for blind detection according to Embodiment 3 of the invention. As illustrated in Fig. 4, the method includes:
Firstly, the terminal equipment configured with the carrier segment detects possible DCI (e.g., DCI format 1A as described in Embodiment 1) according to the transmission mode, including:
   Step 401: the terminal equipment configured with the carrier segment receives aPDCCH on corresponding time-frequency resource.

In which, the PDCCH is received on the time-frequency resource corresponding to the common search region.

Step 402: performing a rate de-matching and a demodulation decoding.

In the embodiment, the DCI after the modulation coding can be obtained through the rate de-matching according to the bit length of the DCI assumed by the user (i.e., the bit length of the DCI generated in the above two manners). In which, the terminal equipment shall analyse the DCI format that may occur, and calculate the length of the DCI to be detected, i.e., the output length of the rate de-matching.

When there are a plurality of possible lengths of the DCI, multiple rate de-matchings and subsequent steps such as channel decodings and CRC checks shall be performed according to the plurality of possible lengths of the DCI. Thus, when the base station generates the DCI, the types of the DCI length can be decreased by making L1=L2, thereby reducing the rate de-matchings and subsequent steps such as demodulation decodings and CRC checks.

Step 403: performing a CRC check to preliminary judge the correctness of the received DCI.

In which, when performing the CRC coding, the base station adds RNTI information into the check code, and the terminal equipment can perform the CRC check based on extracting the RNTI, so as to preliminary judge the correctness, affiliation and function of the received DCI. Specifically:
The terminal equipment extracts 16-bit CRC code and RNTI information from a sequence through a CRC decoding, performs an error check of the received signal, and judges the affiliation and function of the DCI according to the RNTI information.

In which, when the base station scrambles the DCI using any of SI-RNTI, P-RNTI, RA-RNTI, Temporary C-RNTI and TPC-RNTI, the terminal equipment can obtain the RNTI information, and acquire, from the RNTI information, that the DCI is common DCI and the function thereof. When the base station scrambles the DCI using SPS-RNTI or C-RNTI, the terminal equipment can obtain the RNTI information, and acquire, from the RNTI information, that the DCI is user-specific DCI and the function thereof

Step 404: if the CRC check is judged as correct in step 403, determining that corresponding DCI is detected according to the flag bit in the DCI.

In which, the DCI format may be determined according to the flag bit in the DCI. As shown in Table 5, the flag may be represented with 1 bit. For example, when the flag bit is "1", it means that the DCI is DCI format 0; and when the flag bit is "1", it means that the DCI is DCI format 1A.

If the flag bit obtained herein is valued as "1", it can be determined that the format of the detected DCI is 1A, i.e., the terminal equipment detects corresponding DCI, and the process ends.

Step 405: if the CRC check is judged as wrong in step 403, further judging whether the current number of blind detections exceeds a predefined number; if Yes, performing step 406, and if No, performing step 401.

Step 406: if the judgment result of step 405 is positive, discarding the PDCCH, and ending the process.

In the embodiment, if the CRC check is judged as wrong in step 403, step 406 can be performed directly, and step 405 is optional.

In addition, after the CRC check is successful in step 403, the terminal equipment may judge the specific meaning of the DCI source bit according to a predetermined manner of generating the DCI source bit.

As can be seen from the above embodiment, when L1 is unequal to L2, the base station makes L1=L2 for the terminal equipment configured with the carrier segment when generating the DCI, thus the bit length of the common search region will not be increased, thereby avoiding the increase of the number of blind detections at the terminal equipment and the calculation complexity.

The embodiments of the invention further provide a base station and terminal equipment, as described in the following Embodiments 4 and 5. Since the base station and the terminal equipment solve problems in the principles similar to those of the method for transmitting DCI and the method for blind detection based on the base station and the terminal equipment, please refer to the implementations of the methods for the implementations of the base station and the terminal equipment, and the repeated contents are omitted.

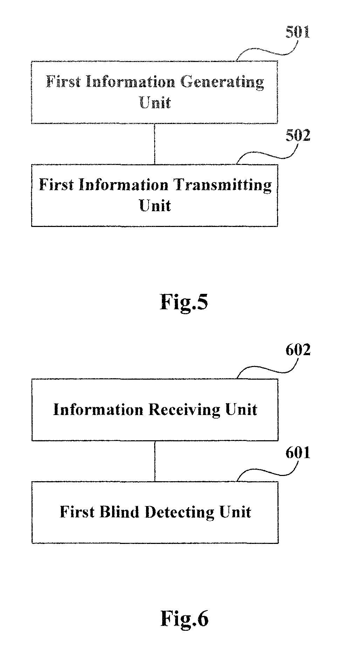

Fig. 5 is a structural schematic diagram of a base station according to Embodiment 4 of the invention. As illustrated in Fig. 5, the base station includes a first information generating unit 501 and a first information transmitting unit 502, wherein the first information generating unit 501 is configured to generate a DCI, such that bit length L1 of the DCI of terminal equipment configured with a carrier segment is equal to bit length L2 of a DCI of the same format of terminal equipment not configured with a carrier segment; and the first information transmitting unit 502 is configured to transmit the DCI for the terminal equipment configured with the carrier segment in a common search region of a control channel, the DCI being common DCI or user-specific DCI.

In the embodiment, when the first information generating unit 501 generates the DCI, a bit length of a RA domain in the DCI of the terminal equipment configured with the carrier segment is determined according to a bandwidth of an independent carrier, thereby ensuring that L1=L2. This manner is suitable for both the common DCI and the user-specific DCI.

In the embodiment, when the DCI of the terminal equipment configured with the carrier segment is the user-specif DCI, the first information generating unit 501 is configured to generate the DCI by deleting a redundant bit. In that case, the first information generating unit 501 may include a determining unit, a calculating unit and an information generating unit, wherein,
the determining unit is configured to determine the bit length of the RA domain in the DCI of the terminal equipment configured with the carrier segment according to a bandwidth of an independent carrier and a bandwidth of the configured carrier segment; the calculating unit is configured to calculate a difference between the bit length of the RA domain in the DCI of the terminal equipment configured with the carrier segment and that of the RA domain in the DCI of the same format of the terminal equipment not configured with the carrier segment; and the information generating unit is configured to generate the DCI by deleting a redundant bit of a number corresponding to the difference.

In addition, the first information transmitting unit 501 may transmit the DCI in any existing manner. In the embodiment, the first information transmitting unit may include a CRC coding module, a modulation coding module, a rate matching module and a mapping module. As described in Embodiment 1, the CRC coding module may add CRC in which RNTI information is added into the generated DCI source bit; the modulation coding module performs a modulation coding of the DCI source bit added with the CRC; the rate matching module performs a rate matching for the modulation-coded information; the mapping module forms a PDCCH, maps the PDCCH to corresponding physical time-frequency resource, and transmits the DCI to the terminal equipment through the PDCCH. The detailed process has been described in steps 302-304 of Fig. 3, and herein is omitted.

It is clear that the base station transmits the DCI generated in the above manner to the terminal equipment configured with the carrier segment in the common search region through the first information transmitting unit 501. Thus the base station may further inlcude a notifying unit (not illustrated) for notifying the DCI generated in the above manner to the terminal equipment to pre-appoint with the terminal equipment configured with the carrier segment, such that the terminal equipment configured with the carrier segment can search the common search region for the DCI according to the appointment.

As can be seen from the above embodiment, the base station generates corresponding DCI for the terminal equipment configured with the carrier segment in the common search region of the control channel, such that the bit length of the DCI is equal to that of the DCI of the same format of the terminal equipment not configured with the carrier segment in the common search region of the control channel, thus the bit length of the common search region will not be increased, thereby avoiding the increase of the number of blind detections at the terminal equipment and the calculation complexity.

Fig. 6 is a structural schematic diagram of terminal equipment according to Embodiment 5 of the invention, wherein a base station configures terminal equipment with a carrier segment. As illustrated in Fig. 6, the terminal equipment includes a first blind detecting unit 601 configured to detect corresponding DCI in a common search region of a control channel according to a generation manner of the DCI; wherein the DCI is generated by the base station in a predefined manner, such that bit length L1 of the DCI is equal to bit length L2 of a DCI of the same format of terminal equipment not configured with a carrier segment in the common search region.

In the embodiment, the first blind detecting unit 601 may include a receiving module, a rate de-matching module, a demodulation decoding module and a CRC decoding module. In which, the receiving module receives a PDCCH on corresponding time-frequency domain; the rate de-matching module performs a rate de-matching; the demodulation decoding module performs a demodulation decoding of the DCI after the rate de-matching; and the CRC decoding module performs a CRC check of the demodulation-decoded DCI, so as to preliminarily judge the correctness of the received DCI. If the check is correct, it is determined that corresponding DCI is detected according to the flag bit in the DCI. In which, the working processes of various modules are corresponding to steps 401-403 in Embodiment 3 as illustrated in Fig. 4, and herein are omitted.

Moreover, in the embodiment, the terminal equipment may further include an information receiving unit 602 configured to receive a notification message sent by the base station, such that the terminal equipment configured with the carrier segment acquires the manner of generating the DCI by the base station.

As can be seen from the above embodiment, for the terminal equipment configured with the carrier segment, the bit length of the DCI detected in the common search region of the control channel is equal to that of the DCI. of the same format of the terminal equipment not configured with the carrier segment in the common search region, thereby avoiding the increase of the number of blind detections at the terminal equipment and the calculation complexity.

The embodiments of the invention further provide a method for transmitting DCI, when a bit length of a RA domain in a DCI of terminal equipment configured with a carrier segment is unequal to that of a RA domain in a DCI of terminal equipment not configured with a carrier segment, the method includes: a base station transmits user-specific DCI in a user-specific search region for terminal equipment configured with a carrier segment, while does not transmit corresponding user-specific DCI in a common search region of a control channel.

It is clear that by not transmitting the user-specific DCI for the terminal equipment configured with the carrier segment in the common search region, the bit length of the common search region will not be increased, thereby avoiding the increase of the number of blind detections at the terminal equipment and the calculation complexity.

In the embodiment, the base station may transmit the DCI in corresponding region according to the DCI type. In which, the user-specific DCI is transmitted in the user-specific search region of the control channel, and corresponding common DCI is transmitted for the terminal equipment configured with the carrier segment in the common search region of the control channel. In that case, the bit length of the common DCI is equal to that of the DCI of the same format of the terminal equipment not configured with the carrier segment in the common search region.

In addition, the method may further include: the base station generates the common or user-specific DCI of the terminal equipment configured with the carrier segment, wherein a bit length of a RA domain in the common DCI is determined according to a bandwidth of an independent carrier.

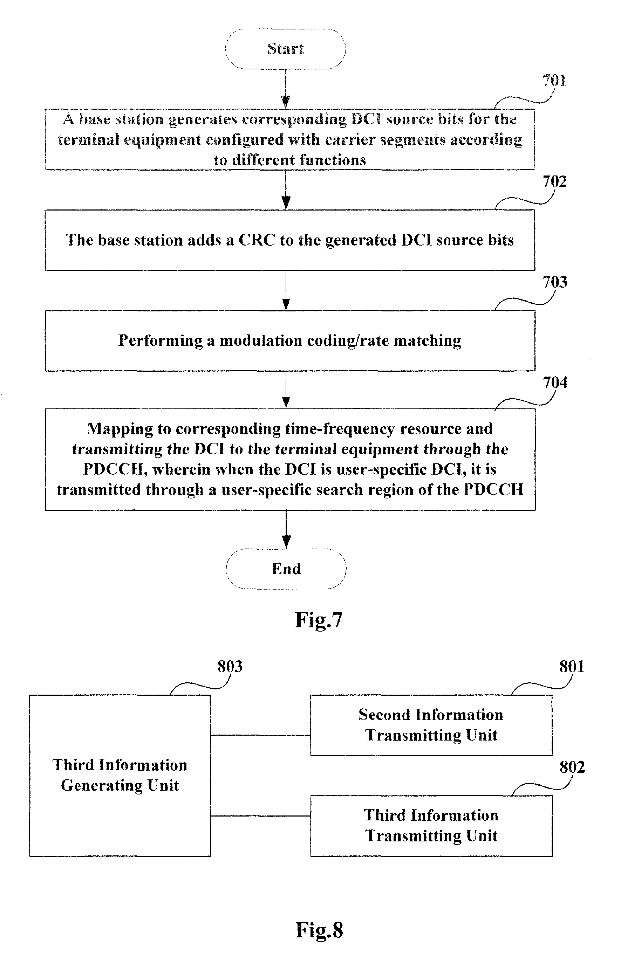

Next, descriptions are made through an example where DCI format 1A is transmitted for the terminal equipment configured with the carrier segment. For example, the independent carrier has a bandwidth of 5MHz, and the carrier segment has a bandwidth of 3MHz, thus the bit length of the RA domain in the DCI of the terminal equipment configured with the carrier segment is unequal to that of a RA domain in the DCI of the terminal equipment not configured with the carrier segment. Fig. 7 is a flowchart of a method for transmitting DCI according to Embodiment 6 of the invention. As illustrated in Fig. 2, the method includes:
Step 701: a base station generates corresponding DCI source bits for terminal equipment configured with a carrier segment according to different functions.

In which, the generated DCI may be common DCI or user-specific DCI.

When the generated DCI is common DCI, its bit length L1 is equal to bit length L2 of a DCI of the same format of terminal equipment not configured with a carrier segment.

In which, corresponding DCI source bits may be generated according to the transmission mode and the system requirement, wherein the process of generating the DCI source bits is similar to the prior art, and herein is omitted.

For example, when the generated DCI format 1A is common DCI, a bit length of a RA domain is determined according to a bandwidth of an independent carrier, i.e., the number of bits of the RA domain is determined as 9 according to 5MHz (as shown in Table 1), such that L1=L2.

In the embodiment, when the generated DCI format 1A is user-specific DCI, it is not required to ensure that L1=L2 since the user-specific DCI is not transmitted in the common search region.

Step 702: the base station adds a CRC to the generated DCI source bits.

In which, CRC is the most common error check code in the field of digital communication.

In the embodiment, the CRC coding for DCI may use a 16-bit check field in which RNTI information for identifying DCI affiliation and function is added.

For example, when the DCI is added with SI-RNTI, P-RNTI, RA-RNTI, Temporary C-RNTI, TPC-RNTI as shown in Table 1, i.e., the DCI is scrambled by using the above RNTI information, it means that the DCI is common DCI and its function is shown in Table 1. When the DCI is added with SPS-RNTI, C-RNTI as shown in Table 1, i.e., the DCI is scrambled by using the above RNTI information, it means that the DCI is user-specific DCI and its function is shown in Table 1.

Step 703: performing a modulation coding and a rate matching for DCI source bits added with the CRC.

Step 704: forming a PDCCH, mapping the PDCCH to corresponding physical time-frequency resource, and transmitting the DCI to the terminal equipment through the PDCCH.

In which, when one of SI-RNTI, P-RNTI, RA-RNTI, Temporary C-RNTI and TPC-RNTI is used in step 702, i.e., the DCI is common DCI, the DCI is transmitted in the common search region of the PDCCH in step 704.

When one of SPS-RNTI and C-RNTI is used in step 702, i.e., the DCI. is user-specific DCI, the DCI is transmitted in the user-specific search region of the PDCCH in step 704.

In which, steps 702-704 are similar to steps 302-304 in Embodiment 1, and herein are omitted.

In the embodiment, through the above manner, the base station prevents the increase of the bit length in the common search region, thus the base station can pre-appoint with the terminal equipment configured with the carrier segment. For example, the base station may notify the terminal equipment through a message, such that the terminal equipment configured with the carrier segment can search the common search region for the common DCI according to the appointment, and search the user-specific search region for the user-specific DCI.

As can be seen from the above embodiment, the base station prevents the user-specific DCI from being transmitted in the common search region of the control channel, thus the bit length of the common search region will not be increased, thereby avoiding the increase of the number of blind detections at the terminal equipment and the calculation complexity.

Embodiment 7 of the invention provides a method for blind detection used in terminal equipment configured with a carrier segment, a bit length of a RA domain in a DCI of terminal equipment configured with a carrier segment being unequal to that of a RA domain in a DCI of terminal equipment not configured with a carrier segment. The method includes terminal equipment configured with a carrier segment detects user-specific DCI in a user-specific search region of a control channel, while does not detect the same in a common search region of the control channel.

The terminal equipment configured with the carrier segment detects the common DCI in the common search region of the control channel, wherein a bit length of a RA domain in the common DCI is determined according to a bandwidth of an independent carrier.

In the practical implementation, during the blind detection, the terminal equipment does not acquire whether the base station transmits the user-specific DCI at the current time, thus the terminal equipment searches both the common region and the user-specific region. In the common region, the terminal equipment only searches for the common DCI, i.e., the DCI scrambled by using SI-RNTI, P-RNTI, TPC-RNTI, RA-RNTI or Temporary C-RNTI; while in the user-specific region, the terminal equipment searches for the user-specific DCI.

In the embodiment, the process for the terminal equipment to search the common search region and the user-specific search region for corresponding DCI is similar to that in Embodiment 2, and herein is omitted.

In Embodiments 6-7, the control channel may be PDCCH.

When using the transmitting manner of Embodiment 6, the base station may notify the terminal equipment such that the terminal equipment detects the DCI in the manner of Embodiment 7. The base station may notify the transmitted information to the terminal equipment through a signaling.

As can be seen from the above embodiment, for the terminal equipment configured with the carrier segment, the user-specific DCI is not transmitted in the common search region of the control channel, such that the terminal equipment searches the common search region and the user-specific search region, respectively, according to the DCI types during the DCI detection, thereby avoiding the increase of the number of blind detections at the terminal equipment and the calculation complexity.

The embodiments of the invention further provide a base station and terminal equipment, as described in Embodiments 8 and 9. Since the base station and the terminal equipment solve problems in the principles similar to those of the methods for the resource assignment based on the base station and the terminal equipment, please refer to the implementations of the methods for the implementations of the base station and the terminal equipment, and the repeated contents are omitted.

Fig. 8 is a structural schematic diagram of a base station according to Embodiment 8 of the invention. As illustrated in Fig. 8, the base station includes a second information transmitting unit 801 configured not to transmit corresponding user-specific DCI for terminal equipment configured with a carrier segment in a common search region of a control channel, and to transmit user-specific DCI in a user-specific search region.

As illustrated in Fig. 8, the base station may further include a third information transmitting unit 802 configured to transmit corresponding common DCI for the terminal equipment configured with the carrier segment in the common search region of the control channel, wherein a bit length of the common DCI is equal to that of a DCI of the same format of terminal equipment not configured with a carrier segment in the common search region.

As illustrated in Fig. 8, the base station may further include a third information generating unit 803 configured to generate the common or user-specific DCI of the terminal equipment configured with the carrier segment, and a bit length of a RA domain in the common DCI is determined according to a bandwidth of an independent carrier. When the common DCI is generated, the DCI is supplied to the third information transmitting unit 802 for a transmission, and when the user-specific DCI is generated, the DCI is supplied to the second information transmitting unit 801 for a transmission.

In the embodiment, the structures and functions of the second information transmitting unit 801 and the third information transmitting unit 802 are similar to those of the first information transmitting unit 502 in Embodiment 2, and herein are omitted.

Embodiment 9 of the invention provides terminal equipment configured with a carrier segment by a base station, the terminal equipment including:
a second blind detecting unit configured to detect user-specific DCI in a user-specific search region of a control channel, and not to detect the same in a common search region of the control channel.

In addition, the terminal equipment further includes a third blind detecting unit configured to detect common DCI in the common search region of the control channel, a bit length of a RA domain in the common DCI being determined according to a bandwidth of an independent carrier.

In which, the structures and functions of the second and third blind detecting units are similar to those of the first blind detecting unit in Embodiment 5, and herein are omitted.

In the above embodiment, the terminal equipment may be a mobile phone, or any device having a communication capability, such as gaming machine, PDA, portable computer, etc.

As can be seen from the above embodiment, the base station prevents the user-specific DCI from being transmitted in the common search region of the control channel, thus the bit length of the common search region will not be increased, thereby avoiding the increase of the number of blind detections at the terminal equipment and the calculation complexity.

The embodiments of the invention further provide a computer-readable program, wherein when the program is executed in a base station, the program enables a computer to carry out the method for transmitting DCI as described in Embodiment 1, 2 or 6 in the base station.

The embodiments of the invention further provide a storage medium in which a computer-readable program is stored, wherein the computer-readable program enables a computer to carry out the method for transmitting DCI as described in Embodiment 1, 2 or 6 in a base station.

The embodiments of the invention further provide a computer-readable program, wherein when the program is executed in terminal equipment, the program enables a computer to carry out the method for blind detection as described in Embodiment 3 or 7 in the terminal equipment.

The embodiments of the invention further provide a storage medium in which a computer-readable program is stored, wherein the computer-readable program enables a computer to carry out the method for blind detection as described in Embodiment 3 or 7 in terminal equipment.

One or more of the functional blocks described with respect to Figs. 5, 6 and 8 and/or one or more combinations thereof may be implemented as general processor, Digital Signal Processor (DSP), Application-Specific Integrated Circuit (ASIC), Field Programmable Gate Array (FPGA) or other programmable logic device, discrete gate or transistor logic device, discrete hardware component or any appropriate combinations thereof for executing the functions described in the application, or implemented as combinations of computing devices such as a combination of the DSP and the microprocessor, a plurality of microprocessors, one or more microprocessor combined with the DSP communication, or any other such configuration.

Although the specific examples of the invention are described in the application, a person skilled in the art can design the modifications to the invention without deviating from the concept of the invention.

The above apparatuses and methods of the present invention may be implemented by hardware, or a combination of hardware and software. The invention relates to a computer readable program which when being executed by a logic part, enables the logic part to implement the aforementioned apparatuses or constituent parts, or enables the logic part to implement the aforementioned methods or steps. The logic part for example may be a field programmable logic part, a microprocessor, a processor used in the computer, etc. The invention further relates to a storage medium for storing the above program, such as hard disc, magnetic disc, optical disc, DVD, flash memory, etc.

The invention is described as above in conjunction with the specific embodiments. But a person skilled in the art shall appreciate that those descriptions are just exemplary, rather than limitations to the protection scope of the invention. A person skilled in the art can make various modifications and changes to the invention based on the spirit and the principle of the invention, and those modifications and changes also fall within the scope of the invention.

## Claims

1. A method for transmitting Downlink Control Information (DCI), when a bit length of a Resource Assignment (RA) domain in a DCI of terminal equipment configured with a carrier segment is unequal to that of a RA domain in a DCI of terminal equipment not configured with a carrier segment, the method comprising:
generating, by a base station, a DCI for terminal equipment configured with a carrier segment, such that a bit length of the DCI of the terminal equipment configured with the carrier segment is equal to that of a DCI of the same format of terminal equipment not configured with a carrier segment; and
transmitting, by the base station, the DCI for the terminal equipment configured with the carrier segment in a common search region of a control channel, the DCI being common DCI or user-specific DCI.

2. The method according to claim 1, wherein the base station determines a bit length of a RA domain in the DCI of the terminal equipment configured with the carrier segment according to a bandwidth of an independent carrier.

3. The method according to claim 1, wherein when the DCI of the terminal equipment configured with the carrier segment is user-specific DCI, the base station generates the DCI by deleting a redundant bit.

4. The method according to claim 3, wherein the step of generating, by the base station, the DCI by deleting a redundant bit comprises:
determining, by the base station, a bit length of a RA domain in the DCI according to a bandwidth of an independent carrier and a bandwidth of the configured carrier segment;
determining a difference between the bit length of the RA domain in the DCI of the terminal equipment configured with the carrier segment and that of the RA domain in the DCI of the same format of the terminal equipment not configured with the carrier segment; and
deleting a redundant bit of a number corresponding to the difference, so as to generate the DCI.

5. A method for blind detection, when a bit length of a Resource Assignment (RA) domain in a Downlink Control Information (DCI) of terminal equipment configured with a carrier segment is unequal to that of a RA domain in a DCI of terminal equipment not configured with a carrier segment, the method comprising:
detecting, by terminal equipment configured with a carrier segment, corresponding DCI in a common search region of a control channel according to a generation manner of the DCI;
wherein the DCI is generated by a base station in a predefined manner, such that a bit length of the DCI of the terminal equipment configured with the carrier segment is equal to that of a DCI of the same format of terminal equipment not configured with a carrier segment in the common search region.

6. The method according to claim 5, wherein the DCI is generated in a manner as follows:
generating the DCI by the base station by determining, a bit length of a RA domain in the DCI according to a bandwidth of an independent carrier, or by deleting a redundant bit when the DCI is user-specific DCI.

7. A base station, when a bit length of a Resource Assignment (RA) domain in a Downlink Control Information (DCI) of terminal equipment configured with a carrier segment is unequal to that of a RA domain in a DCI of terminal equipment not configured with a carrier segment, the base station comprising:
a first information generating unit configured to generate a DCI for terminal equipment configured with a carrier segment, such that a bit length of the DCI of the terminal equipment configured with the carrier segment is equal to that of a DCI of the same format of terminal equipment not configured with a carrier segment; and
a first information transmitting unit configured to transmit the DCI for the terminal equipment configured with the carrier segment in a common search region of a control channel, the DCI being common DCI or user-specific DCI.

8. The base station according to claim 7, wherein a bit length of a RA domain in the DCI of the terminal equipment configured with the carrier segment is determined according to a bandwidth of an independent carrier.

9. The base station according to claim 7, wherein when the DCI of the terminal equipment configured with the carrier segment is user-specific DCI, the first information generating unit generates the DCI by deleting a redundant bit.

10. The base station according to claim 9, wherein the first information generating unit comprises:
a determining unit configured to determine a bit length of a RA domain in the DCI of the terminal equipment configured with the carrier segment according to a bandwidth of an independent carrier and a bandwidth of the configured carrier segment;
a calculating unit configured to calculate a difference between the bit length of the RA domain in the DCI of the terminal equipment configured with the carrier segment and that of the RA domain in the DCI of the same format of the terminal equipment not configured with the carrier segment; and
an information generating unit configured to generate the DCI by deleting a redundant bit of a number corresponding to the difference.

11. Terminal equipment, configured with a carrier segment by a base station, when a bit length of a Resource Assignment (RA) domain in a Downlink Control Information (DCI) of terminal equipment configured with a carrier segment is unequal to that of a RA domain in a DCI of terminal equipment not configured with a carrier segment, the terminal equipment comprising:
a first blind detecting unit configured to detect corresponding DCI in a common search region of a control channel in a generating manner of the DCI;
wherein the DCI is generated by the base station in a predefined manner, such that a bit length of the DCI is equal to that of a DCI of the same format of terminal equipment not configured with a carrier segment in the common search region.

12. The terminal equipment according to claim 11, wherein the DCI is generated in a manner as follows: generating the DCI by the base station by determining a bit length of a RA domain in the DCI according to a bandwidth of an independent carrier, or by deleting a redundant bit when the DCI is user-specific DCI.

13. A method for transmitting Downlink Control Information (DCI), when a bit length of a Resource Assignment (RA) domain in a DCI of terminal equipment configured with a carrier segment is unequal to that of a RA domain in a DCI of terminal equipment not configured with a carrier segment, the method comprising:
transmitting, by a base station, user-specific DCI in a user-specific search region for terminal equipment configured with a carrier segment, and not transmitting corresponding user-specific DCI in a common search region of a control channel.

14. The method according to claim 13, wherein the method further comprises:
transmitting, by the base station, corresponding common DCI for the terminal equipment configured with the carrier segment in the common search region of the control channel, wherein a bit length of a RA domain in the common DCI is determined according to a bandwidth of an independent carrier, such that a bit length of the common DCI is equal to that of a DCI of the same format of terminal equipment not configured with a carrier segment in the common search region.

15. A method for blind detection, when a bit length of a Resource Assignment (RA) domain in a Downlink Control Information (DCI) of terminal equipment configured with a carrier segment is unequal to that of a RA domain in a DCI of terminal equipment not configured with a carrier segment, the method comprising:
detecting, by terminal equipment configured with a carrier segment, user-specific DCI in a user-specific search region of a control channel, and not detecting the same in a common search region of the control channel.

16. The method according to claim 15, wherein the method further comprises:
detecting, by the terminal equipment configured with the carrier segment, common DCI in the common search region of the control channel, a bit length of a RA domain in the common DCI being determined according to a bandwidth of an independent carrier.

17. A base station, when a bit length of a Resource Assignment (RA) domain in a Downlink Control Information (DCI) of terminal equipment configured with a carrier segment is unequal to that of a RA domain in a DCI of terminal equipment not configured with a carrier segment, the base station comprising:
a second information transmitting unit configured not to transmit corresponding user-specific DCI for terminal equipment configured with a carrier segment in a common search region of a control channel, and to transmit user-specific DCI in a user-specific search region.

18. The base station according to claim 17, wherein the base station further comprises:
a third information transmitting unit configured to transmit corresponding common DCI for the terminal equipment configured with the carrier segment in the common search region of the control channel, wherein a bit length of a RA domain in the common DCI is determined according to a bandwidth of an independent carrier, such that a bit length of the common DCI is equal to that of a DCI of the same format of terminal equipment not configured with a carrier segment in the common search region.

19. Terminal equipment, configured with a carrier segment by a base station, when a bit length of a Resource Assignment (RA) domain in a DCI of terminal equipment configured with a carrier segment is unequal to that of a RA domain in a DCI of terminal equipment not configured with a carrier segment, the terminal equipment comprising:
a second blind detecting unit configured to detect user-specific DCI in a user-specific search region of a control channel, and not to detect user-specific DCI in a common search region of the control channel.

20. The terminal equipment according to claim 19, wherein the terminal equipment further comprises:
a third blind detecting unit configured to detect common DCI in the common search region of the control channel, a bit length of a RA domain in the common DCI being determined according to a bandwidth of an independent carrier.

21. A computer-readable program, wherein when the program is executed in a base station, the program enables a computer to carry out the method for transmitting Downlink Control Information (DCI) as claimed in any of claims 1-4 and 13-14 in the base station.

22. A storage medium in which a computer-readable program is stored, wherein the computer-readable program enables a computer to carry out the method for transmitting Downlink Control Information (DCI) as claimed in any of claims 1-4 and 13-14 in a base station.

23. A computer-readable program, wherein when the program is executed in terminal equipment, the program enables a computer to carry out the method for blind detection as claimed in claim 5 or 6, or claim 15 or 16 in the terminal equipment.

24. A storage medium in which a computer-readable program is stored, wherein the computer-readable program enables a computer to carry out the method for blind detection as claimed in claim 5 or 6, or claim 15 or 16 in a terminal equipment.
